# EUROPEAN PATENT APPLICATION

(11) **EP 4 129 556 A1**
(43) Date of publication of application: **08.02.2023**
(21) Application number: 21779145.8
(22) Date of filing: 08.03.2021
(51) Int. Cl.: B23K 26/00, B23K 26/21, B23K 26/34, B33Y 10/00, B33Y 30/00, B33Y 50/00, B29C 64/153, B29C 64/386, B22F 3/105, B22F 3/16

(54) **THREE-DIMENSIONAL ADDITIVE MANUFACTURING DEVICE, CONTROL METHOD, AND PROGRAM**

(30) Priority: 30.03.2020 JP 2020061231
(71) Applicant: Nidec Machine Tool Corporation, Ritto-shi, Shiga 520-3080 (JP)
(72) Inventor: ISHII, Koh, Ritto-shi, Shiga 520-3080 (JP)
(74) Representative: Studio Torta S.p.A.
(86) International application number: PCT/JP2021/008921
(87) International publication number: WO 2021/199930

(57) **Abstract**

A three-dimensional additive manufacturing device appropriately detects a manufacturing abnormality. The three-dimensional additive manufacturing device includes a powder supply unit that supplies powder, a light irradiation unit that irradiates the powder with a light beam to melt and harden the powder to manufacture a layered structure, an imaging unit that captures an image of a manufacturing site including a molten pool formed of a molten powder, a result acquisition unit that acquires a determination result as to whether manufacturing of the layered structure is abnormal by inputting the image to a learning model, and an information output unit that outputs information based on the determination result. The learning model is obtained by machine-learning a correspondence relationship between an image of the manufacturing site at the time of abnormality and an abnormality type of the image, and is used for determining whether the manufacturing of the layered structure is abnormal.

## Description

### TECHNICAL FIELD

The present invention relates to a three-dimensional additive manufacturing device, a control method, and a program.

### BACKGROUND ART

In recent years, a layered structure forming method for forming a layered structure using powder such as metal powder as a raw material has been put into practical use. For example, Patent Document 1 describes that a manufactured object manufactured by a 3D printer is imaged by a camera, and an abnormality in the manufactured object is evaluated by machine learning.

### CITATIONS LIST

### PATENT LITERATURE

Patent Literature 1: JP 6429876 B2

### SUMMARY OF INVENTION

### TECHNICAL PROBLEMS

However, various cases are conceivable as causes of an abnormality in the manufactured object, and there is a possibility that an abnormality cannot be appropriately detected by the detection method as described in Patent Literature 1. Therefore, there is room for improvement in appropriately detecting a manufacturing abnormality.

The present disclosure solves the above-described problems, and an object thereof is to provide a three-dimensional additive manufacturing device, a control method, and a program capable of appropriately detecting a manufacturing abnormality.

### SOLUTION TO THE PROBLEMS

In order to solve the above-described problems and achieve the object, a three-dimensional additive manufacturing device according to the present disclosure includes a powder supply unit that supplies powder, a light irradiation unit that irradiates the powder with a light beam to melt and harden the powder to manufacture a layered structure, an imaging unit that captures an image of a manufacturing site including a molten pool formed of a molten powder, a result acquisition unit that acquires a determination result as to whether manufacturing of the layered structure is abnormal by inputting the image to a learning model, and an information output unit that outputs information based on the determination result. The learning model is obtained by machine-learning a correspondence relationship between an image of the manufacturing site at the time of abnormality and the abnormality type of the image, and is used for determining whether the manufacturing of the layered structure is abnormal.

In order to solve the above-described problems and achieve the object, a control method according to the present disclosure is a control method to be used in a three-dimensional additive manufacturing device including a powder supply unit that supplies powder and a light irradiation unit that irradiates the powder with a light beam to melt and harden the powder to manufacture a layered structure. The method includes the steps of capturing an image of a manufacturing site including a molten pool formed of a molten powder, acquiring a determination result as to whether manufacturing of the layered structure is abnormal by inputting the image to a learning model, and outputting information based on the determination result. The learning model is obtained by machine-learning a correspondence relationship between an image of the manufacturing site at the time of abnormality and the abnormality type of the image, and is used for determining whether the manufacturing of the layered structure is abnormal.

In order to solve the above-described problems and achieve the object, a program according to the present disclosure is to cause a computer to execute a control method to be used in a three-dimensional additive manufacturing device including a powder supply unit that supplies powder and a light irradiation unit that irradiates the powder with a light beam to melt and harden the powder to manufacture a layered structure. The control method includes the steps of capturing an image of a manufacturing site including a molten pool formed of a molten powder, acquiring a determination result as to whether manufacturing of the layered structure is abnormal by inputting the image to a learning model, and outputting information based on the determination result. The learning model is obtained by machine-learning a correspondence relationship between an image of the manufacturing site at the time of abnormality and the abnormality type of the image, and is used for determining whether the manufacturing of the layered structure is abnormal.

### ADVANTAGEOUS EFFECTS OF INVENTION

According to the present disclosure, a manufacturing abnormality can be detected appropriately.

### BRIEF DESCRIPTION OF DRAWINGS

FIG. 1 is a schematic diagram of a three-dimensional additive manufacturing device of the present embodiment.
FIG. 2 is a schematic diagram of a layering head according to the present embodiment.
FIG. 3 is a block diagram of a control device according to the present embodiment.
FIG. 4 is a conceptual schematic diagram of a learning model.
FIG. 5 is a schematic diagram illustrating an exemplary teacher image for each label.
FIG. 6 is a schematic diagram illustrating an exemplary teacher image for each label.
FIG. 7 is a schematic diagram illustrating an exemplary teacher image for each label.
FIG. 8 is a schematic diagram illustrating an exemplary teacher image for each label.
FIG. 9 is a schematic diagram illustrating an exemplary teacher image for each label.
FIG. 10 is a schematic diagram illustrating an exemplary teacher image for each label.
FIG. 11 is a schematic diagram illustrating an exemplary teacher image for each label.
FIG. 12 is a schematic diagram illustrating an exemplary teacher image for each label.
FIG. 13 is a schematic diagram illustrating an exemplary teacher image for each label.
FIG. 14 is a schematic diagram illustrating an example of a determination result.
FIG. 15 is a flowchart illustrating a control flow according to the present embodiment.

### DESCRIPTION OF EMBODIMENTS

Hereinafter, preferred embodiments of the present invention will be described in detail with reference to the accompanying drawings. Note that the present invention is not limited by the embodiments, and in the case where there are a plurality of embodiments, the present invention includes a combination of the embodiments.

### (Overall configuration of three-dimensional additive manufacturing device)

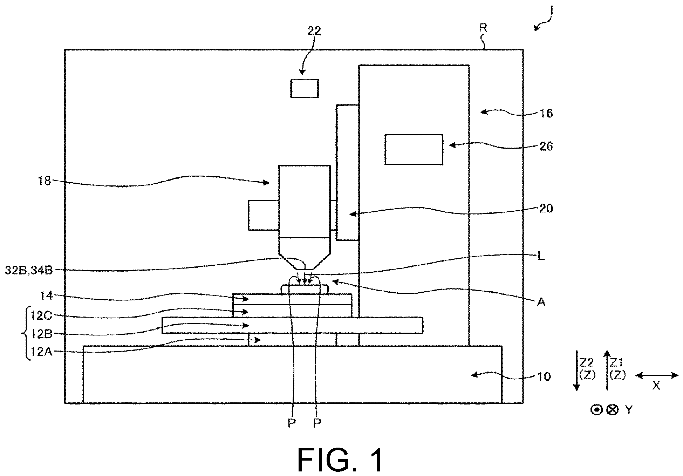

FIG. 1 is a schematic diagram of a three-dimensional additive manufacturing device of the present embodiment. Here, in the present embodiment, one direction in a horizontal plane is defined as a direction X, a direction orthogonal to the direction X in the horizontal plane is defined as a direction Y, and a direction orthogonal to each of the direction X and the direction Y, that is, a vertical direction, is defined as a direction Z. One of the directions along the direction Z is defined as a direction Z1, and the other of the directions along the direction Z, that is, a direction opposite to the direction Z1, is defined as a direction Z2. In the present embodiment, the direction Z1 is a direction directed upward in the vertical direction, and the direction Z2 is a direction directed downward in the vertical direction.

As illustrated in FIG. 1, the three-dimensional additive manufacturing device 1 includes, in a three-dimensional build chamber R, a platform part 10, a base moving part 12, a base part 14, a platform part 16, a layering head 18, a head moving part 20, an imaging unit 22, and a control device 26. The control device 26 may be provided outside the three-dimensional build chamber R.

The three-dimensional additive manufacturing device 1 is a device that forms a layered structure A, which is a three-dimensional object, on the base part 14. The base part 14 is a member serving as a base on which the layered structure A is formed. In the present embodiment, the base part 14 is a plate-shaped member. Note that the base part 14 is not limited to this. The base part 14 is a member that serves as a base of the layered structure A as a separate body from the layered structure A, but may be a member that is linked to the layered structure A to serve as a part of the layered structure A.

### (Platform part, base moving part)

The platform part 10 is a platform that supports the base moving part 12, the base part 14, and the like. The base moving part 12 is provided on the platform part 10 and supports the base part 14. The base moving part 12 is a mechanism that moves the base part 14 under the control of the control device 26. The base moving part 12 includes a first moving part 12A, a second moving part 12B, and a rotation part 12C. The first moving part 12A is a mechanism that moves the base part 14 in a first direction along the horizontal direction (orthogonal to the vertical direction). In the present embodiment, the first moving part 12A moves the base part 14 along the direction Y. More specifically, in the present embodiment, the second moving part 12B, the rotation part 12C, and the base part 14 are arranged on the first moving part 12A, and the first moving part 12A moves the second moving part 12B, the rotation part 12C, and the base part 14 along the direction Y.

The second moving part 12B is a mechanism that moves the base part 14 in a second direction along the horizontal direction (orthogonal to the vertical direction), and the second direction is a direction orthogonal to the first direction. In the present embodiment, the second moving part 12B moves the base part 14 along the direction X. More specifically, in the present embodiment, the rotation part 12C and the base part 14 are disposed on the second moving part 12B, and the second moving part 12B moves the rotation part 12C and the base part 14 along the direction X. In the present embodiment, the first moving part 12A and the second moving part 12B are sliders that move the base part 14 placed on the upper part, but may be mechanisms other than sliders.

The rotation part 12C is a rotary table on which the base part 14 is disposed. The rotation part 12C rotates the base part 14 disposed thereon by rotating about at least one rotation axis. In the present embodiment, the rotation part 12C rotates the base part 14 about three rotation axes orthogonal to each other.

As described above, the base moving part 12 moves the base part 14 along the direction X and the direction Y by the first moving part 12A and the second moving part 12B, and rotates the base part 14 about the three rotation axes by the rotation part 12C. That is, the base moving part 12 is a five-axis moving mechanism that moves the base part 14 along two axes and rotates it about three rotation axes. However, the base moving part 12 is not limited to the five-axis moving mechanism, and may be, for example, a twoaxis moving mechanism that moves the base part 14 along the direction X and the direction Y.

### (Platform part)

The platform part 16 is a pedestal provided in the three-dimensional build chamber R, and in the present embodiment, the head moving part 20 is provided.

### (Head moving part)

The head moving part 20 moves the layering head 18 along the direction Z. In the present embodiment, the head moving part 20 is attached to the platform part 16. The head moving part 20 moves the layering head 18 along the direction Z. In the present embodiment, the head moving part 20 is a slider that moves the layering head 18, but may be a mechanism other than a slider. The head moving part 20 is not limited to be attached to the platform part 16, and the attachment position is arbitrary.

As described above, in the present embodiment, by moving the base part 14 (layered structure A) in the X direction and the Y direction by the base moving part 12, the positions of the layering head 18 in the X direction and the Y direction relative to the layered structure A are changed. In the present embodiment, the position of the layering head 18 in the Z direction relative to the layered structure A is changed by moving the layering head 18 in the Z direction by the head moving part 20. However, the method of changing the position of the layering head 18 relative to the layered structure A is not limited thereto, and for example, the layering head 18 may be moved in at least one direction of the X direction and the Y direction, or the layered structure A may be moved in the Z direction. That is, the three-dimensional additive manufacturing device 1 may change the position of the layering head 18 relative to the layered structure A by moving the layered structure A, may change the position of the layering head 18 relative to the layered structure A by moving the layering head 18, or may change the position of the layering head 18 with respect to the layered structure A by moving both the layered structure A and the layering head 18.

### (Layering head)

The layering head 18 is provided on the direction Z1 side of the base part 14, that is, on the vertically upper side of the base part 14. The layering head 18 forms the layered structure A on the base part 14 by irradiating the base part 14 with a light beam L from the light beam emission port 32B and discharging the powder P from the powder discharge port 34B toward the base part 14. That is, the three-dimensional additive manufacturing device 1 according to the present embodiment is a deposition-type three-dimensional additive manufacturing device including the layering head 18.

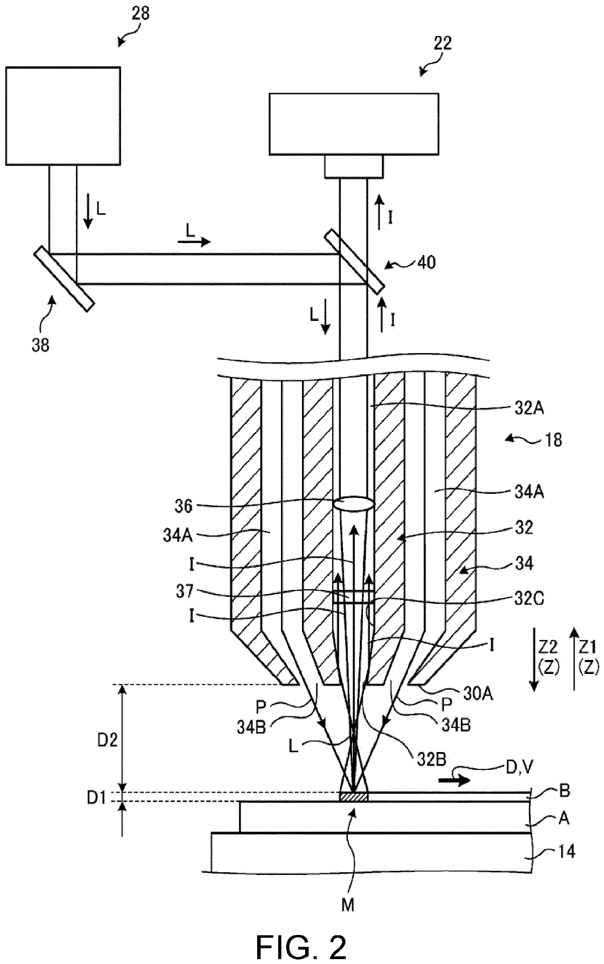

FIG. 2 is a schematic diagram of a layering head of the present embodiment. As illustrated in FIG. 2, the layering head 18 includes an inner tube 32 and an outer tube 34. The outer tube 34 is a tubular member, and has a diameter decreasing toward the tip, that is, the direction Z2. The inner tube 32 is also a tubular member, and has a diameter decreasing toward the tip, that is, the direction Z2. Since the inner tube 32 is inserted in the outer tube 34, the inner tube 32 and the outer tube 34 constitute a double pipe. In the layering head 18, a space inside the inner tube 32 becomes a beam path 32A through which a light beam L passes. In the layering head 18, a space between the outer peripheral surface of the inner tube 32 and the inner peripheral surface of the outer tube 34 is a powder passage 34A through which the powder P passes. That is, the powder passage 34A is a passage having a shape surrounding the periphery of the beam path 32A. In the present embodiment, the powder passage 34A is concentrically arranged on the outer periphery of the beam path 32A.

In the layering head 18, a light beam emission port 32B communicating with the beam path 32A is opened at an end 30 A on the direction Z2 side. That is, the light beam emission port 32B is an opening on the direction Z2 side of the beam path 32A. An optical element 36 and protective glass 37 are provided in the beam path 32A. The optical element 36 includes, for example, a collimating lens that collimates the light beam L, and a condenser lens that condenses the collimated light beam L. The protective glass 37 is provided on the end portion 30A side from the optical element 36, and is cover glass for protecting the inside of the layering head 18. The layering head 18 is connected to a light source 28. The light source 28 is a light source that outputs the light beam L. The light beam L output from the light source 28 is reflected by mirrors 38 and 40 provided between the light source 28 and the beam path 32A, and is introduced into the beam path 32A. The light beam L travels in the beam path 32A toward the Z2 direction side, is condensed by the optical element 36, and is emitted from the light beam emission port 32B to the outside of the layering head 18 through the protective glass 37. The light beam L emitted from the light beam emission port 32B travels in the direction Z2 and is emitted toward the base part 14.

In the layering head 18, a powder discharge port 34B communicating with the powder passage 34A is opened at the end portion 30A on the direction Z2 side. That is, the powder discharge port 34B is an opening on the direction Z2 side of the beam path 32A. The powder discharge port 34B is opened so as to surround the light beam emission port 32B. The powder passage 34A is connected to a powder storage mechanism (not illustrated) that stores the powder P, and the powder P is supplied from the powder storage mechanism. The powder P supplied into the powder passage 34A flows in the powder passage 34A in the direction Z2, and is discharged from the powder discharge port 34B to the outside of the layering head 18. The powder P discharged from the powder discharge port 34B travels in the direction Z2 and is discharged toward the base part 14.

Here, the powder P is discharged toward the base part 14 with a predetermined spot diameter, and the light beam L is emitted toward the base part 14 with a predetermined spot diameter. The powder P is melted by the heat of the light beam L and the heat of the layered structure A heated by the irradiation of the light beam L to form a molten pool M. It can be said that the molten pool M includes at least one of the molten powder P and the molten layered structure A. Since the base part 14 is moved with respect to the layering head 18, the position irradiated with the light beam L changes. Therefore, the portion where the molten pool M is formed by being irradiated with the light beam L is cooled and hardened by not being irradiated with the light beam L to form a bead B. The layered structure A is formed by three-dimensionally building the beads B. Hereinafter, a portion where the powder P is discharged with irradiation of the light beam L on the base part 14, that is, a portion where the bead B is formed, will be referred to as a manufacturing site. The manufacturing site includes at least a portion where the molten pool M is formed, and further includes the molten pool M and the bead B around the molten pool M.

As described above, in the present embodiment, the inner tube 32, in other words, the powder passage 34A and the powder discharge port 34B can be said to be a powder supply unit that supplies the powder P, and the outer tube 34, in other words, the beam path 32A and the light beam emission port 32B can be said to be a light irradiation unit that irradiates the powder P with the light beam L to melt and harden the powder P to form the layered structure A. That is, in the present embodiment, the powder supply unit and the light irradiation unit are integrally configured as the layering head 18. However, the powder supply unit and the light irradiation unit may be separate bodies. In addition, the light beam L in the present embodiment is a laser beam, but is not limited to a laser beam, and may be, for example, an electron beam. The powder P in the present embodiment is metal powder, but is not limited to metal powder.

### (Imaging unit)

In the present embodiment, the imaging unit 22 is an infrared camera that captures an image of infrared light I. The imaging unit 22 is, for example, an InGaAs camera. The imaging unit 22 is attached to the layering head 18, and the position thereof is fixed with respect to the layering head 18. As illustrated in FIG. 2, the imaging unit 22 is provided on the Z1 direction side of the layering head 18, and the optical axis of the imaging unit 22 is coaxial with the optical axis of the light beam L on the beam path 32A. The infrared light I is emitted from the manufacturing site (the molten pool M and the layered structure A around the molten pool M). The infrared light I travels in the Z1 direction in the beam path 32A from the light beam emission port 32B. A mirror 40 reflects the light beam L but transmits the infrared light I, so that the infrared light I passes through the mirror 40 and enters the imaging unit 22. The imaging unit 22 can capture an image of the manufacturing site by capturing an image of the infrared light I. The wavelength of the infrared light I detected by the imaging unit 22 is, for example, 0.75 µm or more and 1000 µm or less, and more preferably, for example, near infrared light having a wavelength of about 0.75 µm or more and 1.4 µm or less. Note that the position where the imaging unit 22 is provided is not limited to the position described above, and may be any position. Furthermore, the imaging unit 22 is not limited to an infrared camera.

As illustrated in FIG. 2, a part of the infrared light I from the manufacturing site (the molten pool M and the layered structure A around it) travels straight in the Z1 direction in the beam path 32A and reaches the imaging unit 22, but the other part of the infrared light I is reflected by an inner peripheral surface 32C of the inner tube 32 and enters the imaging unit 22. The imaging unit 22 also captures an image of the infrared light I reflected by the inner peripheral surface 32C and reaching the imaging unit 22 in this manner. That is, the imaging unit 22 captures an image of the infrared light I traveling straight in the Z1 direction through the light beam emission port 32B, that is, an image of the infrared light I that has reached the imaging unit 22 without being reflected by the inner peripheral surface 32C, and an image of the infrared light I that has reached the imaging unit 22 after being reflected by the inner peripheral surface 32C. The image of the infrared light I that has not been reflected by the inner peripheral surface 32C and has reached the imaging unit 22 is an image in a region inside the outer periphery of the light beam emission port 32B, and can be said to be an image of the manufacturing site (the molten pool M or the layered structure A around it). The image of infrared light I reflected by inner peripheral surface 32C and reaching the imaging unit 22 can be said to be an image of the inner peripheral surface 32C.

### (Control device)

The control device 26 is a device that controls the three-dimensional additive manufacturing device 1, that is, a computer in this example. The control device 26 manufactures the layered structure A by controlling the layering head 18 to emit the light beam L while discharging the powder P from the layering head 18, and moves the position of the base part 14 (layered structure A) with respect to the layering head 18 at a predetermined feed speed. Furthermore, the control device 26 detects the abnormality in the manufacturing of the layered structure A being manufactured by inputting a detection image KA, which is an image of the manufacturing site captured by the imaging unit 22 during manufacturing of the layered structure A, to a machine-learned learning model CN to be described later. The detection image KA can be said to be an image of the manufacturing site of the layered structure A being manufactured, imaged by the imaging unit 22 to detect the manufacturing abnormality in the layered structure A being manufactured.

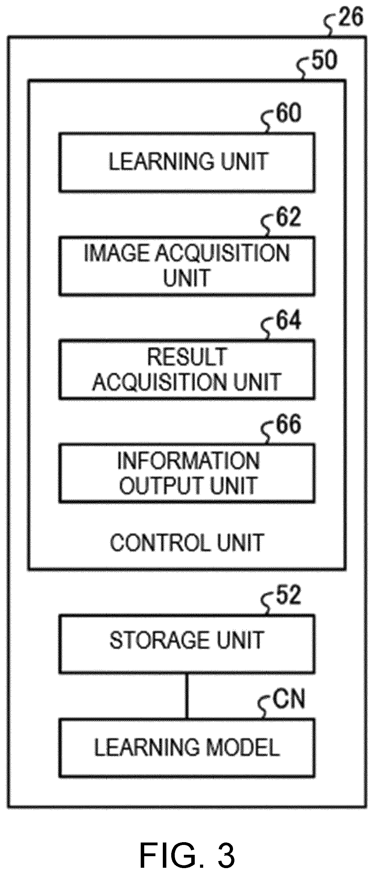

FIG. 3 is a block diagram of a control device according to the present embodiment. As illustrated in FIG. 3, the control device 26 includes a control unit 50 and a storage unit 52. The storage unit 52 is a memory that stores operation content of the control unit 50, information of a program, a learning model CN, and the like, and includes at least one of, for example, a random access memory (RAM), a read only memory (ROM), and an external storage device such as a hard disk drive (HDD).

The control unit 50 is an arithmetic device, that is, a central processing unit (CPU). The control unit 50 includes a learning unit 60, an image acquisition unit 62, a result acquisition unit 64, and an information output unit 66. The control unit 50 reads and executes a program (software) from the storage unit 52 to implement the learning unit 60, the image acquisition unit 62, the result acquisition unit 64, and the information output unit 66, and executes these processes. Note that the control unit 50 may execute processing by one CPU, or may include a plurality of CPUs and execute processing by the plurality of CPUs. In addition, at least one of the learning unit 60, the image acquisition unit 62, the result acquisition unit 64, and the information output unit 66 may be realized by a hardware circuit.

### (Learning unit)

### (Learning model)

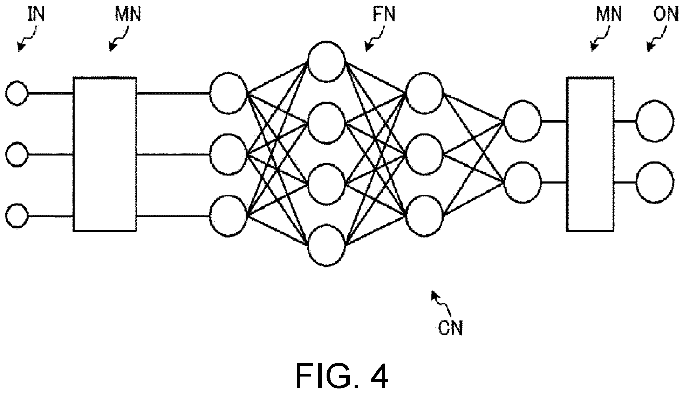

FIG. 4 is a conceptual schematic diagram of a learning model. The learning unit 60 allows an unlearned learning model to be learned to generates the machine-learned learning model CN, and stores the generated learning model CN in the storage unit 52. The learning model CN means a learning model in artificial intelligence (AI). Specifically, the learning model CN is a learning model learned by deep learning, and includes a model (neural network configuration information) that defines a neural network constituting a classifier learned by deep learning, and a variable. The learning model CN can compare the input data with the learned data to determine a degree of similarity, for example, what percentage the degree of similarity is. Deep learning is one method of machine learning, and is constituted of, for example, a neural network of four or more layers in a narrow sense. In the example of the present embodiment, the learning model CN is a conventional neural network (CNN) model, and includes an intermediate layer MN including a plurality of convolution layers and a plurality of pooling layers, and a final layer FN including a fully connected layer, as illustrated in FIG. 4. When the input data IN is input, the CNN model CN performs calculation between the intermediate layer MN and the final layer FN, and outputs output data ON. However, the learning model CN is not limited to the CNN model, and may be a learning model of an arbitrary method.

The learning unit 60 generates the machine-learned learning model CN by setting a weighting factor and a bias value in the learning model using the teacher data. That is, the learning model CN can be said to be a learning model in which a weighting factor and a bias value are learned by the learning unit 60.

The learning model CN in the present embodiment is a learning model obtained by machine learning the correspondence relationship between an image of the manufacturing site when abnormal and the abnormality type of the image, and is a machine-learned learning model for determining whether the manufacturing of the layered structure is abnormal. The learning unit 60 acquires a teacher image K, which is an image obtained by imaging a manufacturing site including the molten pool M, and a label (class) assigned to the teacher image K, as teacher data. The label in the present embodiment is information (identifier) indicating whether the manufacturing of the layered structure including the manufacturing site shown in the teacher image K is abnormal. The label for each teacher image K is known, and the learning unit 60 acquires, for example, a label set for each teacher image K by a person. However, a method of acquiring a label for each teacher image K by the learning unit 60 may be arbitrary. The learning unit 60 inputs the teacher image K and the label as the teacher data to the unlearned learning model to set the weighting factor and the bias value by, for example, backpropagation (back propagation), and generates the machine-learned learning model CN.

### (Teacher image)

The teacher image K is an image of a manufacturing site imaged in advance, and is an image in which a label indicating whether manufacturing of the layered structure is abnormal is known. It is preferable that the teacher image K is an image obtained by capturing, by the imaging unit 22, an image of a manufacturing site of the layered structure actually being manufactured by the three-dimensional additive manufacturing device 1. That is, the imaging unit that has captured the teacher image K preferably has the same configuration as the imaging unit 22 used to detect the manufacturing abnormality from now on. Here, the same configuration means that the position of the imaging unit with respect to the manufacturing site is the same. In other words, the teacher image K is preferably an image captured at the same angle as the detection image KA to be captured for detecting the manufacturing abnormality.

### (Label)

A label is information indicating whether the manufacturing of a layered structure is abnormal, and can also be said to be information for classifying whether the manufacturing is abnormal. A label is assigned to each teacher image K. The abnormal manufacturing of a layered structure refers to a state in which the layered structure is not normally manufactured, and refers to a state in which the layered structure with desired characteristics (shape, strength, and the like) cannot be manufactured if the manufacturing is continued as it is. Either a label indicating that the manufacturing of the layered structure is abnormal or a label indicating that the manufacturing of the layered structure is normal is assigned to each teacher image K.

Furthermore, in the present embodiment, the label indicating the manufacturing abnormality is classified for each type of the manufacturing abnormality in the layered structure. That is, in the teacher image K, what kind of manufacturing abnormality has occurred is known, and a label for each type of manufacturing abnormality is assigned. Since the label is classified for each type of manufacturing abnormality, it can be said that the label indicates an abnormality mode of manufacturing. Examples of the types of manufacturing abnormality (abnormality mode) include an abnormality in the three-dimensional additive manufacturing device 1 and an abnormality in the layered structure A. That is, to each teacher image K, one of a label indicating that the manufacturing is normal, a label indicating that the three-dimensional additive manufacturing device 1 is abnormal, and a label indicating that the layered structure A is abnormal is assigned.

Furthermore, in the present embodiment, a label indicating that the three-dimensional additive manufacturing device 1 is abnormal is also divided into a plurality of sections. Examples of the label indicating that the three-dimensional additive manufacturing device 1 is abnormal include protective glass abnormality, foreign matter adhesion, dew condensation, and alignment abnormality. The protective glass abnormality is a state in which an abnormality occurs in the protective glass 37 provided to the layering head 18 (light irradiation unit), and specifically refers to a state in which the protective glass 37 is contaminated by foreign matter adhesion or the like. The protective glass abnormality may include, for example, a case where the protective glass 37 is broken. The foreign matter adhesion refers to a state in which a foreign matter adheres to the layering head 18 (at least one of the light irradiation unit and the powder supply unit). The foreign matter adhesion may refer to a state in which a foreign matter is adhered in the beam path 32A of the layering head 18. The dew condensation refers to a state in which the optical element of the layering head 18 is dew condensed. The optical element here may be any optical element as long as it is an optical element provided in the layering head 18, but in the example of FIG. 2, the optical element refers to the optical element 36, the protective glass 37, the mirrors 38 and 40, and the like. The alignment abnormality indicates that the alignment between the light irradiation unit and the powder supply unit deviates from the allowable range, and it can also be said that the alignment abnormality indicates that the convergence position of the light beam L and the convergence position of the powder P deviate from the allowable range. As described above, in the present embodiment, the label indicating that the three-dimensional additive manufacturing device 1 is abnormal includes the protective glass abnormality, the foreign matter adhesion, the dew condensation, and the alignment abnormality, but is not limited thereto. For example, at least one of the protective glass abnormality, the foreign matter adhesion, the dew condensation, and the alignment abnormality may be included.

In the present embodiment, a label indicating that the layered structure A being manufactured is abnormal is also divided into a plurality of sections. Examples of the labels indicating that the layered structure A is abnormal include a crack in the layered structure, a height abnormality in the bead B, and sputtering. The layered structure crack means that a crack (breakage) occurs in the layered structure A being manufactured, but the manner of cracking, that is, the shape of a flaw at a cracked portion is not particularly limited. The height abnormality in the bead B means that the height D1 of the bead B illustrated in FIG. 2, that is, the length of the bead B in the Z direction, is out of an allowable range. The height abnormality in the bead B is divided into a decrease in the bead height and an increase in the bead height. The decrease in the bead height refers to a state in which the height D1 of the bead B is smaller than the allowable range, and the increase in the bead height refers to a state in which the height D1 of the bead B is larger than the allowable range. The sputtering refers to a state in which a sputter (spark) occurs around the molten pool M. As described above, in the present embodiment, the labels indicating that the layered structure A is abnormal include crack in the layered structure, decrease in the bead height, increase in the bead height, and sputtering, but are not limited thereto. For example, at least one of crack in the layered structure, decrease in the bead height, increase in the bead height, and sputtering may be included.

### (Example of teacher image for each label)

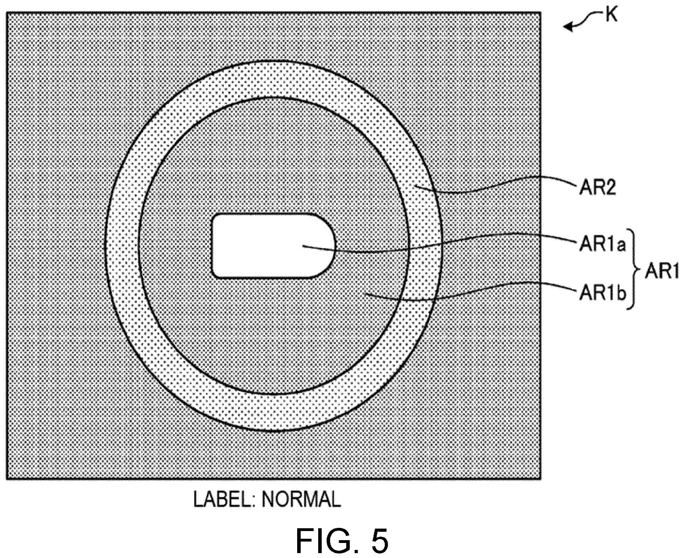

Hereinafter, an example of the teacher image K for each label, that is, for each abnormality mode, will be described. FIGS. 5 to 13 are schematic diagrams each illustrating an exemplary teacher image for each label. FIG. 5 illustrates an example of the teacher image K to which a label indicating normal is assigned. As illustrated in FIG. 5, the teacher image K obtained by imaging the manufacturing site includes an inner region AR1 and an outer region AR2. The inner region AR1 refers to a region of the teacher image K in which an image of a region inside the outer periphery of the light beam emission port 32B is captured, and can be said to be a region in which a manufacturing site is captured. The inner region AR1 includes a manufacturing site region ARla in which the manufacturing site is captured, and a peripheral region ARlb having low luminance around the manufacturing site region AR1a. Since the manufacturing site including the molten pool M has a high temperature, the manufacturing site region ARla in which the manufacturing site is shown has high luminance. On the other hand, since a portion in which the temperature is lowered is shown in the periphery of the manufacturing site, the peripheral region ARlb has luminance lower than that of the manufacturing site region AR1a. On the other hand, the outer region AR2 indicates a region in which an image of the inner peripheral surface 32C is captured, that is, a region in which an image of the infrared light I reflected by the inner peripheral surface 32C and reaching the imaging unit 22 is captured. The outer region AR2 is formed so as to surround the inner region AR1. Since the outer region AR2 is a region obtained by imaging the reflected light on the inner peripheral surface 32C of the infrared light I from the manufacturing site, the outer region AR2 has higher luminance than the peripheral region ARlb and lower luminance than the manufacturing site region AR1a.

The teacher image K to which a normal label is assigned as illustrated in FIG. 5 does not have a feature of the teacher image K to which an abnormal label is assigned as described later.

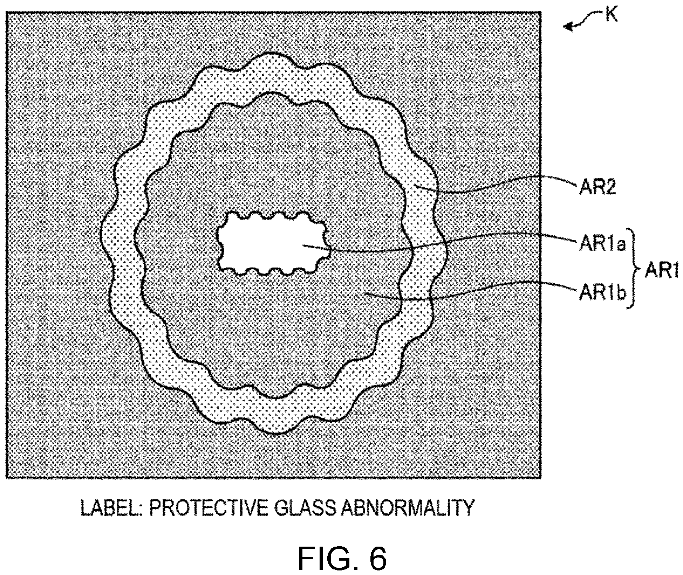

FIG. 6 illustrates an example of the teacher image K to which a label indicating that the content of abnormality is a protective glass abnormality is assigned. When a protective glass abnormality occurs, the infrared light I reaching the imaging unit 22 through the protective glass 37 is scattered. Therefore, as illustrated in FIG. 6, in the teacher image K to which a label of protective glass abnormality is assigned, as a general feature, the entire image such as the manufacturing site region ARla and the outer region AR2 tends to be blurred. In the teacher image K to which a label of protective glass abnormality is assigned, as a general feature, a region having low luminance (shadow) tends to exist in the manufacturing site region AR1a.

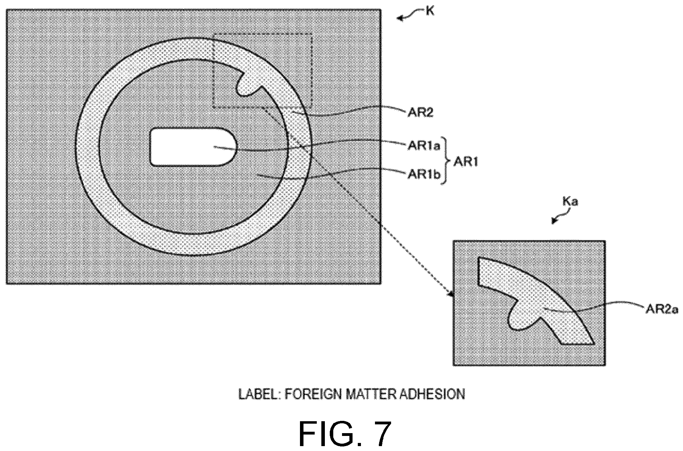

FIG. 7 illustrates an example of the teacher image K to which a label indicating that the content of abnormality is foreign matter adhesion is assigned. When a foreign matter adheres, the place where a foreign matter adheres is blocked by the foreign matter, and the infrared light I does not reach the imaging unit 22. Therefore, as illustrated in FIG. 7, in the teacher image K to which a label of foreign matter adhesion is assigned, as a general feature, a region having low luminance (shadow) tends to exist in the outer region AR2 where the inner peripheral surface 32C is captured. In the present embodiment, the learning unit 60 generates a teacher image Ka obtained by cutting out a part from the teacher image K in which the entire manufacturing site is captured, in order to cause the foreign matter adhesion to be machine-learned. The learning unit 60 causes the learning model CN to learn the foreign matter adhesion by inputting the teacher image Ka and the label of foreign matter adhesion to the learning model as teacher data. The teacher image Ka is an image obtained by cutting out only the outer region AR2 from the teacher image K including the inner region AR1 and the outer region AR2, and more preferably, it is an image obtained by cutting out a part of the outer region AR2. By using such a teacher image Ka as teacher data, foreign matter adhesion can be appropriately learned.

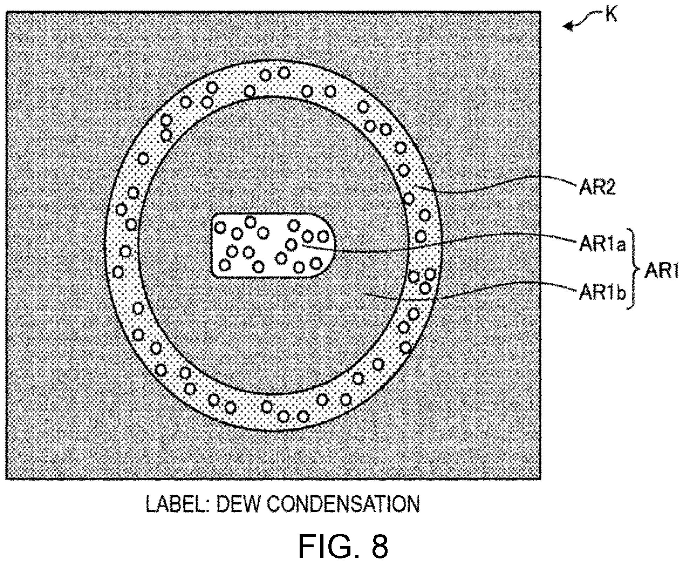

FIG. 8 illustrates an example of the teacher image K to which a label indicating that the content of abnormality is dew condensation is assigned. When dew condensation occurs, the infrared light I transmitted through the dew condensation portion reaches the imaging unit 22. Therefore, as illustrated in FIG. 8, in the teacher image K to which a label of dew condensation is assigned, as a general feature, a granular pattern tends to be generated particularly in the manufacturing site region ARla and the outer region AR2 having high luminance in particular.

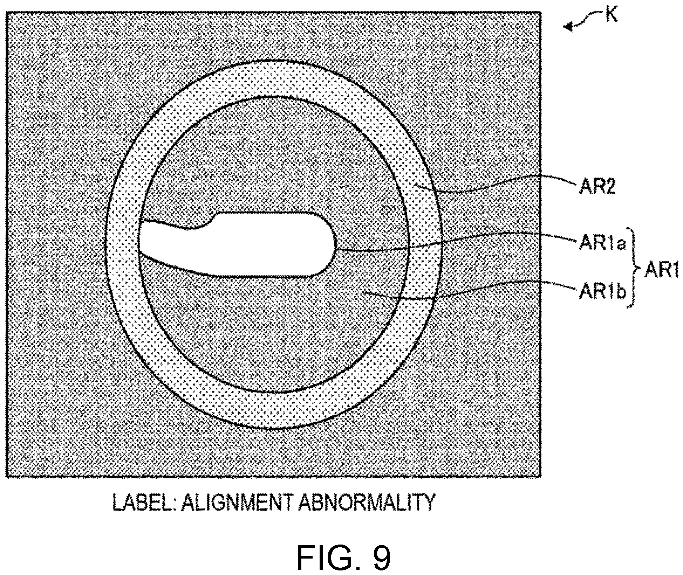

FIG. 9 illustrates an example of the teacher image K to which a label indicating that the content of abnormality is an alignment abnormality is assigned. When an alignment abnormality occurs, the powder P having a high temperature but not melted tends to adhere to a portion other than the molten pool M. Therefore, as illustrated in FIG. 9, in the teacher image K to which the label of alignment abnormality is assigned, as a general feature, the manufacturing site region ARla having high luminance tends to become long in the feed direction (bead extending direction ), and the variation in luminance in the manufacturing site region ARla tends to increase.

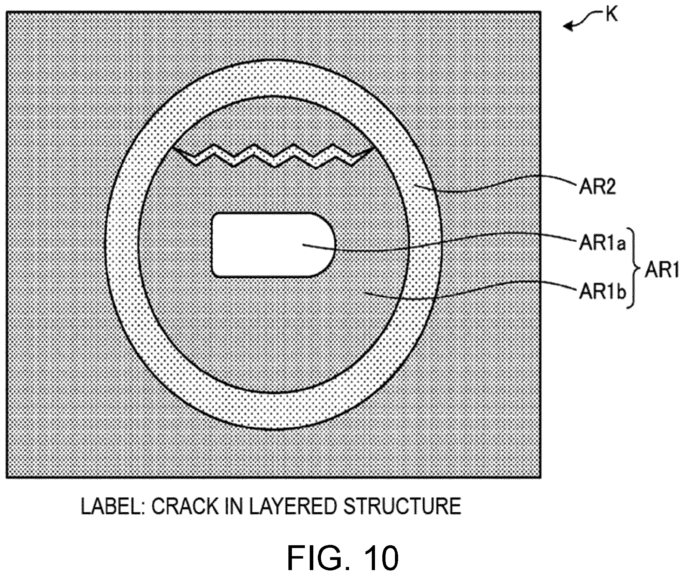

FIG. 10 illustrates an example of the teacher image K to which a label indicating that the content of abnormality is a crack in the layered structure is assigned. When a crack in the layered structure occurs, the infrared light I from the portion of the damage (crack) of the layered structure also enters the imaging unit 22. Therefore, as illustrated in FIG. 10, in the teacher image K to which a label of crack in layered structure is assigned, as a general feature, a linear region having high luminance tends to be formed in the peripheral region ARlb having low luminance.

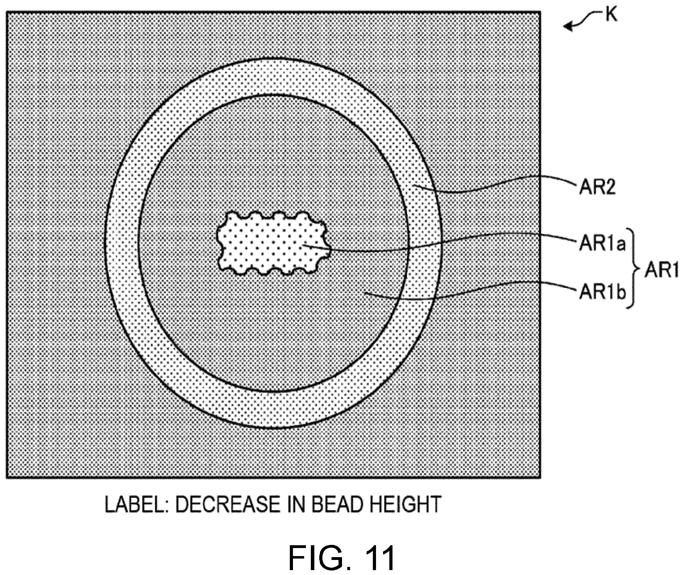

FIG. 11 illustrates an example of the teacher image K to which a label indicating that the content of abnormality is a decrease in the bead height is assigned. When a decrease in bead height occurs, the distance D2 in the Z direction between the manufacturing site illustrated in FIG. 2 and the end portion 30A of the layering head 18 (powder supply unit) becomes longer than the appropriate range. The position in the Z direction of the end portion 30A of the layering head 18 is set such that the light beam L and the powder P from the layering head 18 appropriately converge at the manufacturing site. Therefore, when a decrease in bead height occurs and the distance D2 increases, the intensity of the infrared light I made incident on the imaging unit 22 from the manufacturing site decreases by the distance from the manufacturing site. Therefore, as illustrated in FIG. 11, in the teacher image K to which a label of decrease in bead height is assigned, as a general feature, the luminance and the area of the manufacturing site region ARla is reduced.

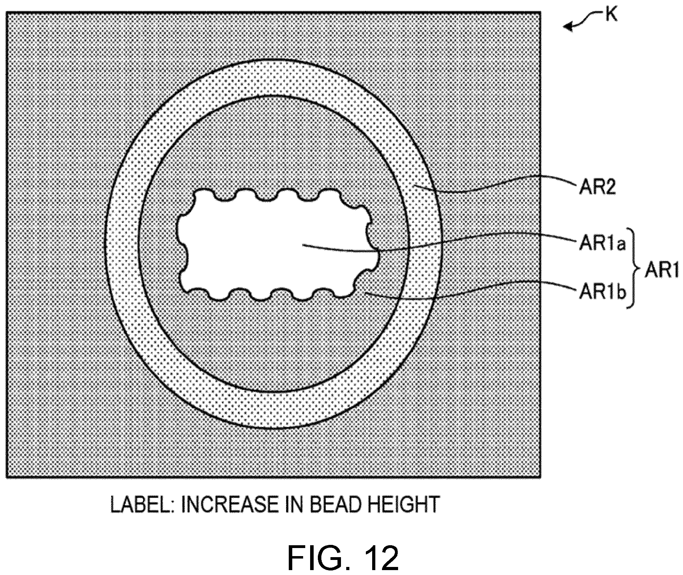

FIG. 12 illustrates an example of the teacher image K to which a label indicating that the content of abnormality is an increase in the bead height is assigned. When an increase in the bead height occurs, the distance D2 becomes shorter than the appropriate range. Accordingly, when an increase in the bead height occurs and the distance D2 decreases, the intensity of the infrared light I made incident on the imaging unit 22 from the manufacturing site increases as the distance from the manufacturing site decreases, and the image of the manufacturing site is out of focus. Therefore, as illustrated in FIG. 12, in the teacher image K to which a label of decrease in bead height is assigned, as a general feature, the luminance and the area of the manufacturing site region ARla are increased.

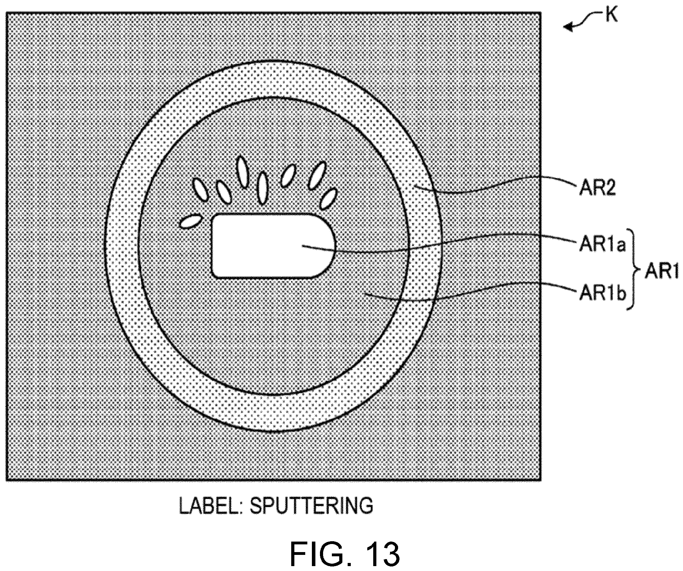

FIG. 13 illustrates an example of the teacher image K to which a label indicating that the content of abnormality is sputtering is assigned. When sputtering occurs, sputtering occurs around the molten pool M. Therefore, as illustrated in FIG. 13, as a general feature, the teacher image K to which a label of sputtering is assigned becomes an image in which a plurality of regions having high luminance are included around the manufacturing site region ARla in the peripheral region AR1b.

The learning unit 60 inputs the teacher image K to which each type of label described above is assigned and information of the label assigned to the teacher image K, to the learning model as teacher data, and generates the machine-learned learning model CN. Therefore, in the case where the detection image K1 with an unknown label is input, the learned model CN can execute calculation, assign a label to the detection image K1, and output the result as a determination result. It can be said that the learned model CN is configured to be able to classify the type of the manufacturing abnormality in the layered structure A. Note that the learning unit 60 preferably inputs a plurality of teacher images K to which the same label is assigned to the learning model as teacher data.

### (Image acquisition unit)

The image acquisition unit 62 illustrated in FIG. 3 controls the imaging unit 22 to cause the imaging unit 22 to capture an image of the manufacturing site of the layered structure A being manufactured, and acquires an image captured by the imaging unit 22 as the detection image K1. The image acquisition unit 62 causes the imaging unit 22 to perform imaging at predetermined time intervals, thereby acquiring the detection images K1 captured at predetermined time intervals. Since the detection image K1 is an image obtained by imaging the manufacturing site similarly to the teacher image K, the detection image K1 is an image including the inner region AR1 and the outer region AR2, but is an image different from the teacher image K according to the manufacturing state.

### (Result acquisition unit)

The result acquisition unit 64 illustrated in FIG. 3 reads the machine-learned learning model CN from the storage unit 52, and inputs the detection image K1 acquired by the image acquisition unit 62 to the learning model CN. In the learning model CN, the detection image K1 is input as the input data IN, the feature amount of the detection image K1 is extracted, and the calculation is executed. As a result, the label of the input detection image K1 is output as output data ON from the learning model CN. The result acquisition unit 64 acquires the label of the detection image K1, output as the output data ON, as a determination result of whether the manufacturing of the layered structure A is abnormal. The result acquisition unit 64 inputs the detection image K1 to the learning model CN every time the detection image K1 is acquired, and acquires a determination result (label) for each detection image K1.

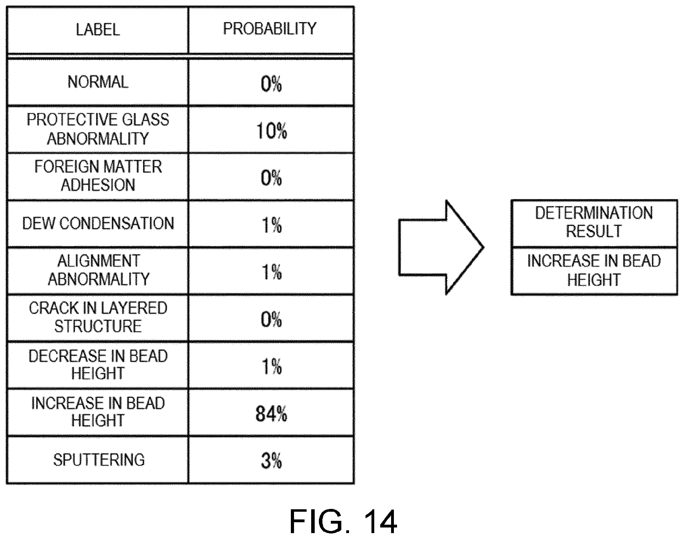

FIG. 14 is a schematic diagram illustrating an example of a determination result. In the present embodiment, the learning model CN can assign, to the detection image K1, any label of normal, protective glass abnormality, foreign matter adhesion, dew condensation, alignment abnormality, crack in layered structure, decrease in bead height, increase in bead height, and sputtering, through learning using the teacher image K. Therefore, the result acquisition unit 64 acquires any label of normal, protective glass abnormality, foreign matter adhesion, dew condensation, alignment abnormality, crack in layered structure, decrease in bead height, increase in bead height, and sputtering, as the determination result. In the present embodiment, the learning model CN calculates a matching degree of the detection image K1 for each label as a probability for each label. That is, it can be said that the learning model CN calculates the probability that the detection image K1 is assigned to each label. The learning model CN determines, from among the respective labels, a label having the highest degree of coincidence, that is, a label having the highest probability of being assigned, as a label to be assigned to the detection image K1, and outputs the label as a determination result. In the example of FIG. 14, since the probability assigned to the label of increase in bead height is the highest, the label of increase in bead height is output as the determination result.

The result acquisition unit 64 acquires the label assigned to the detection image K1 as described above. As described above, since the label is information indicating whether the manufacturing of the layered structure A is abnormal, it can be said that the result acquisition unit 64 has acquired the determination result as to whether the manufacturing of the layered structure A is abnormal. Furthermore, since the label indicates the type of the manufacturing abnormality in the layered structure A, it can be said that the result acquisition unit 64 has acquired the type of the manufacturing abnormality in the layered structure A as the determination result.

As described above, the learning model CN can classify the manufacturing state of the layered structure A into any one of normal, protective glass abnormality, foreign matter adhesion, dew condensation, alignment abnormality, crack in layered structure, decrease in bead height, increase in bead height, and sputtering, but is not limited thereto. For example, the learning model CN may be capable of classifying the manufacturing of the layered structure A into either normal or abnormal. In this case, the result acquisition unit 64 acquires either a normal label or an abnormal label from the learning model CN to acquire a determination result as to whether the manufacturing of the layered structure is abnormal. Furthermore, the learning model CN may be able to classify the manufacturing of the layered structure A into any one of normal, an abnormality in the three-dimensional additive manufacturing device 1, and an abnormality in the layered structure A. In this case, it can be said that the result acquisition unit 64 acquires any one of a normal label, a label of abnormality in the three-dimensional additive manufacturing device 1, and a label of abnormality in the layered structure A from the learning model CN, thereby acquiring at least one of normal, an abnormality in the three-dimensional additive manufacturing device 1, and an abnormality in the layered structure A as the determination result.

### (Information output unit)

The information output unit 66 illustrated in FIG. 3 outputs information based on the determination result acquired by the result acquisition unit 64. More specifically, the information output unit 66 controls the three-dimensional additive manufacturing device 1 based on the determination result acquired by the result acquisition unit 64. The information output unit 66 stops the manufacturing of the layered structure A or outputs a warning based on the determination result acquired by the result acquisition unit 64. The stop of the manufacturing of the layered structure A refers to the stop of irradiation of the light beam L and discharge of the powder P. Furthermore, the warning here is information indicating that there is a possibility of manufacturing abnormality, and may be notified by sound or displayed on the display device. Furthermore, as the warning, label information, that is, information of the type of manufacturing abnormality may be output.

Hereinafter, specific control contents of the information output unit 66 will be described. The information output unit 66 counts the number of times that the manufacturing abnormality is determined in the determination result acquired by the result acquisition unit 64. The information output unit 66 outputs a warning without stopping the manufacturing when the number of times of abnormality, which is the total number of times that the manufacturing is determined to be abnormal, becomes equal to or greater than a first threshold, and stops the manufacturing of the layered structure A when the number of times of abnormality becomes equal to or greater than a second threshold. Since the second threshold is larger than the first threshold, the information output unit 66 first outputs a warning as the number of times of the manufacturing abnormality increases, and stops the manufacturing when the number of times of the manufacturing abnormality further increases. The first threshold and the second threshold can be arbitrarily set. Furthermore, for example, the information output unit 66 may set the first threshold and the second threshold not as the number of times but as a predetermined ratio. In this case, for example, the information output unit 66 calculates the number of detection images K1 determined that the manufacturing is abnormal, among the predetermined number of detection images K1 acquired most recently, as the number of times of abnormality. The information output unit 66 calculates a ratio of the number of times of abnormality to the predetermined number (the number of latest detection images K1), outputs a warning when the ratio is equal to or greater than the first threshold, and stops the manufacturing when the ratio is equal to or greater than the second threshold.

The information output unit 66 preferably counts the number of times of abnormality for each label, that is, for each type of manufacturing abnormality. Therefore, the information output unit 66 counts the number of times of abnormality for each label, outputs a warning when the number of times of abnormality of any of the labels becomes equal to or greater than the first threshold, and stops the manufacturing when the number of times of abnormality of any of the labels becomes equal to or greater than the second threshold. In this case, the first threshold and the second threshold are preferably set for each label, that is, for each type of manufacturing abnormality. Depending on the type of the manufacturing abnormality, it may be better to perform the warning or the manufacturing stop early. Therefore, by setting the threshold for each label, it is possible to appropriately cope with the type of the manufacturing abnormality. For example, the thresholds for the labels of protective glass abnormality and sputtering may be set lower than the thresholds for the labels of decrease in bead height and increase in bead height. However, the information output unit 66 is not limited to counting the number of times of abnormality for each label, and may count, as the number of times of abnormality, the number of all the detection images K1 to which the labels of manufacturing abnormality (labels other than normal) are assigned.

Thus, the information output unit 66 outputs a warning when the number of times of abnormality becomes equal to or greater than the first threshold, and stops the manufacturing when the number of times of abnormality becomes equal to or greater than the second threshold. However, the control by the information output unit 66 is not limited thereto, and for example, only one of the output of the warning and the stop of the manufacturing may be executed. In addition, the information output unit 66 may control at least one of the feed speed V (see FIG. 2) and output of the light beam L on the basis of the determination result acquired by the result acquisition unit 64. Here, the feed speed V refers to the moving speed of the layering head 18 with respect to the layered structure A in the feeding direction D illustrated in FIG. 2. The feeding direction D refers to a direction in which the bead B extends, that is, one direction in which the position of the layering head 18 moves with respect to the base part 14, and is, for example, a direction along the X direction or the Y direction.

The information output unit 66 may determine the control content according to the type of the label acquired by the result acquisition unit 64. For example, when the number of times of abnormality for the label of protective glass abnormality (that is, the number of detection images K1 to which the label of protective glass abnormality is assigned) becomes equal to or greater than a predetermined threshold (for example, the second threshold), the information output unit 66 may stop the manufacturing and automatically replace the protective glass 37 after the stop of the manufacturing. Further, for example, when the number of times of abnormality for the label of decrease in bead height becomes equal to or greater than a predetermined threshold (for example, a threshold smaller than the second threshold), the information output unit 66 may execute at least one of decrease in the feed speed V and increase in the output of the light beam L without stopping the manufacturing. Further, for example, when the number of times of abnormality for the label of increase in bead height becomes equal to or greater than a predetermined threshold (for example, a threshold smaller than the second threshold), the information output unit 66 may execute at least one of increase in the feed speed V and decrease in the output of the light beam L without stopping the manufacturing. Furthermore, for example, when the number of times of abnormality for the label of sputtering becomes equal to or greater than a predetermined threshold value (for example, a threshold smaller than the second threshold), the information output unit 66 may decrease the output of the light beam L until the sputtering is not observed without stopping the manufacturing.

### (Control flow)

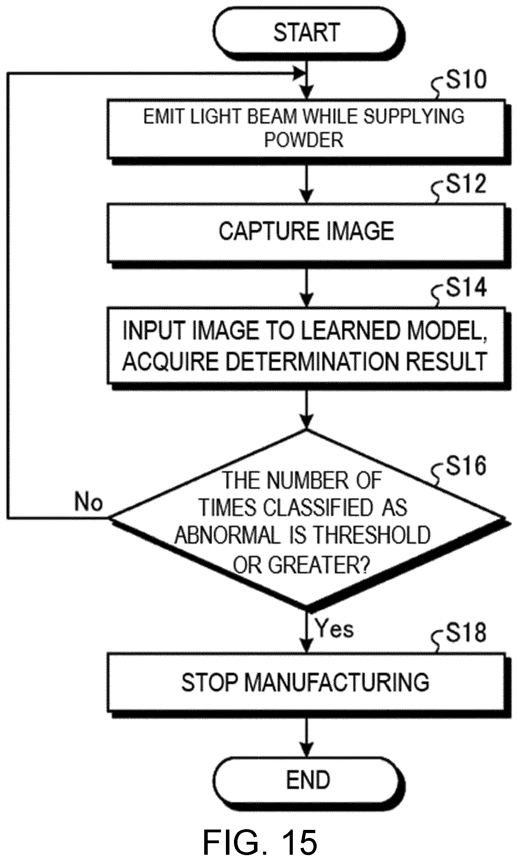

Next, a flow of control by the control device 26 described above will be described. FIG. 15 is a flowchart illustrating a control flow according to the present embodiment. As illustrated in FIG. 15, the control device 26 controls the layering head 18 to cause the imaging unit 22 to capture the detection image K1 (step S12) while causing the powder P to be supplied and emitting the light beam L (step S10). The control device 26 inputs the detection image K1 to the learned learning model CN and acquires a determination result, that is, a label assigned to the detection image K1 (step S14). The control device 26 counts the number of times of manufacturing abnormality based on the determination result, and when the number of times of manufacturing abnormality is equal to or greater than a threshold (second threshold) (step S16; Yes), the manufacturing is stopped (step S18). On the other hand, when the number of times of manufacturing abnormality is not equal to or greater than the threshold (second threshold) (step S16; No), the manufacturing is not stopped, and the process returns to step S10 to continue the manufacturing. Although only the control of the manufacturing stop is illustrated here, as described above, output of the warning, adjustment of the feed speed V, adjustment of the output of the light beam L, and the like may also be executed based on the number of times of the manufacturing abnormality.

### (Effects of present embodiment)

As described above, the three-dimensional additive manufacturing device 1 according to the present embodiment includes the powder supply unit (the layering head 18 in the present embodiment) that supplies the powder P, the light irradiation unit (the layering head 18 in the present embodiment) that irradiates the powder P with the light beam L to melt and harden the powder P to manufacture the layered structure A, the imaging unit 22 that captures an image (detection image K1) of the manufacturing site including a molten pool formed of a molten powder P, the result acquisition unit 64, and the information output unit 66. The result acquisition unit 64 inputs the detection image K1 to the learning model CN that is a learning model CN obtained by machine learning the correspondence relationship between an image (teacher image K) of the manufacturing site at the time of abnormality and the abnormality type of the image, and is for determining whether the manufacturing of the layered structure A is abnormal, and acquires a determination result as to whether the manufacturing of the layered structure A is abnormal. The information output unit 66 outputs information based on the determination result. When manufacturing is performed by the three-dimensional additive manufacturing device, manufacturing abnormality may occur. Since the manufacturing abnormality occurs due to various causes, it is difficult to appropriately detect the manufacturing abnormality during execution of the manufacturing. On the other hand, the three-dimensional additive manufacturing device 1 according to the present embodiment causes the pattern of the manufacturing abnormality to be learned in advance by the learning model CN, and inputs the detection image K1 captured during the manufacturing to the learning model CN. The three-dimensional additive manufacturing device 1 according to the present embodiment can appropriately detect the manufacturing abnormality by using the learning model CN in this way. Furthermore, the three-dimensional additive manufacturing device 1 according to the present embodiment inputs an image of the manufacturing site including the molten pool M to the learning model CN as the detection image K1. Since the manufacturing site including the molten pool M is suitable for detecting the manufacturing abnormality, the three-dimensional additive manufacturing device 1 according to the present embodiment can appropriately detect the manufacturing abnormality.

In addition, the learning model CN is configured to be able to classify the type of abnormality in the manufacturing of the layered structure A, and the result acquisition unit 64 acquires the type of abnormality in the manufacturing of the layered structure A as a determination result by inputting the image (detection image K1) to the learning model CN. According to the three-dimensional additive manufacturing device 1 of the present embodiment, it is possible to appropriately detect what kind of manufacturing abnormality is occurring, that is, the abnormal mode.

In addition, the result acquisition unit 64 acquires at least one of an abnormality in the three-dimensional additive manufacturing device 1 and an abnormality in the layered structure A as the determination result. Since the learning model CN is configured to be able to classify at least one of an abnormality in the three-dimensional additive manufacturing device 1 and an abnormality in the layered structure A, the result acquisition unit 64 can detect at least one of an abnormality in the three-dimensional additive manufacturing device 1 and an abnormality in the layered structure A. According to the three-dimensional additive manufacturing device 1 of the present embodiment, it is possible to appropriately cope with the abnormal mode by individually detecting such an abnormal mode.

In addition, as the type of abnormality in the three-dimensional additive manufacturing device 1, the result acquisition unit 64 acquires at least one of an abnormality in the protective glass 37 provided to the light irradiation unit (layering head 18), a state in which a foreign matter adheres to at least one of the light irradiation unit and the powder supply unit (layering head 18), dew condensation on the light irradiation unit (layering head 18), and an alignment abnormality between the light irradiation unit and the powder supply unit. Since the learning model CN is configured to be able to classify at least one of protective glass abnormality, foreign matter adhesion, dew condensation, and alignment abnormality, the result acquisition unit 64 can detect at least one of them. According to the three-dimensional additive manufacturing device 1 of the present embodiment, it is possible to appropriately cope with the abnormal mode by individually detecting such an abnormal mode.

In addition, the result acquisition unit 64 acquires, as the type of abnormality in the layered structure A, at least one of an abnormality in the height of the bead B of the layered structure A, a crack in the layered structure A, and a state in which sputtering occurs from the layered structure A. Since the learning model CN is configured to be able to classify at least one of an abnormality in the bead height, a crack in the layered structure, and sputtering, the result acquisition unit 64 can detect at least one of them. According to the three-dimensional additive manufacturing device 1 of the present embodiment, it is possible to appropriately cope with the abnormal mode by individually detecting such an abnormal mode.

Furthermore, the information output unit 66 stops the manufacturing of the layered structure A based on the determination result. According to the three-dimensional additive manufacturing device 1 of the present embodiment, manufacturing is stopped based on the determination result of the manufacturing abnormality, so that an appropriate response to the abnormality can be performed.

Furthermore, the information output unit 66 stops the manufacturing of the layered structure A when the number of times of acquiring the determination result that the manufacturing of the layered structure is abnormal is equal to or greater than the threshold (second threshold). According to the three-dimensional additive manufacturing device 1 of the present embodiment, manufacturing is stopped according to the number of times that the manufacturing is determined to be abnormal, so that the appropriate response according to the abnormality can be made.

Furthermore, the information output unit 66 outputs a warning indicating that there is an abnormality in manufacturing, based on the determination result. According to the three-dimensional additive manufacturing device 1 of the present embodiment, a warning is output based on the determination result of the manufacturing abnormality, so that an appropriate response to the abnormality can be performed.

In addition, the information output unit 66 controls at least one of the moving speed (feed speed V) of the powder supply unit (layering head 18) with respect to the layered structure A and the output of the light beam L, based on the determination result. According to the three-dimensional additive manufacturing device 1 of the embodiment, the feed speed V and the output of the light beam L are controlled based on the determination result of the manufacturing abnormality, so that the manufacturing accuracy can be appropriately improved.

In addition, the learning model CN is a learning model obtained by machine-learning a correspondence relationship between an image of a manufacturing site (teacher image K) when at least one of abnormality types occurs, and an abnormality type. The abnormality types include an abnormality in the protective glass 37 provided to the light irradiation unit (layering head 18), a state where a foreign matter adheres to at least one of the light irradiation unit and the powder supply unit (layering head 18), dew condensation on the light irradiation unit (layering head 18), an alignment abnormality between the light irradiation unit and the powder supply unit, an abnormality in the height of the bead B of the layered structure A, a crack in the layered structure A, and a state where sputtering occurs from the layered structure A. By using such a learning model CN, the manufacturing abnormality can be appropriately detected.

The control method according to the present embodiment is used for the three-dimensional additive manufacturing device 1 including the powder supply unit (layering head 18 in the present embodiment) that supplies the powder P and the light irradiation unit (layering head 18 in the present embodiment) that irradiates the powder P with the light beam L to melt and harden the powder P to manufacture the layered structure A. The present control method includes the steps of: capturing an image (detection image K1) of a manufacturing site including the molten pool M formed of the molten powder P, inputting the image (detection image K1) to a learning model CN to acquire a determination result as to whether manufacturing of the layered structure A is abnormal, and outputting information based on the determination result. The learning model CN is obtained by machine learning a correspondence relationship between the image (teacher image K) of the manufacturing site at the time of abnormality and the abnormality type of the image, and is used for determining whether manufacturing of the layered structure A is abnormal. According to the present control method, a manufacturing abnormality can be appropriately detected.

A program according to the present embodiment causes a computer to execute a control method to be used in the three-dimensional additive manufacturing device 1 including the powder supply unit (layering head 18 in the present embodiment) that supplies the powder P and the light irradiation unit (layering head 18 in the present embodiment) that irradiates the powder P with the light beam L to melt and harden the powder P to thereby manufacture the layered structure A. The present program causes a computer to execute the steps of: capturing an image (detection image K1) of a manufacturing site including the molten pool M formed of the molten powder P, inputting the image (detection image K1) to the learning model CN to acquire a determination result as to whether manufacturing of the layered structure A is abnormal, and outputting information based on the determination result. The learning model CN is obtained by machine learning a correspondence relationship between the image (teacher image K) of the manufacturing site at the time of abnormality and the abnormality type of the image, and is used for determining whether manufacturing of the layered structure A is abnormal. According to the present program, the manufacturing abnormality can be appropriately detected.

While the embodiments of the present invention have been described above, the embodiments are not limited to the contents described above. In addition, the above-described constituent elements include those that can be easily assumed by those skilled in the art, those that are substantially the same, and those in a so-called equivalent range. Furthermore, the above-described constituent elements can be appropriately combined. Furthermore, various omissions, substitutions, or changes in the constituent elements can be made without departing from the gist of the above-described embodiments.

### REFERENCE SIGNS LIST

- 1: three-dimensional additive manufacturing device
- 18: layering head (powder supply unit, light irradiation unit)
- 22: imaging unit
- 26: control device
- 60: learning unit
- 62: image acquisition unit
- 64: result acquisition unit
- 66: information output unit
- A: layered structure
- B: bead
- CN: learning model
- K: teacher image
- K1: detection image (image)

## Claims

1. A three-dimensional additive manufacturing device comprising:
a powder supply unit that supplies powder;
a light irradiation unit that irradiates the powder with a light beam to melt and harden the powder to manufacture a layered structure;
an imaging unit that captures an image of a manufacturing site including a molten pool formed of a molten powder;
a result acquisition unit that acquires a determination result as to whether manufacturing of the layered structure is abnormal by inputting the image to a learning model, the learning model being obtained by machine-learning a correspondence relationship between an image of the manufacturing site at a time of abnormality and an abnormality type of the image, and being used for determining whether the manufacturing of the layered structure is abnormal; and
an information output unit that outputs information based on the determination result.

2. The three-dimensional additive manufacturing device according to claim 1, wherein the learning model is configured to be able to classify an abnormality type of the manufacturing of the layered structure, and the result acquisition unit acquires the abnormality type of the manufacturing of the layered structure as the determination result by inputting the image to the learning model.

3. The three-dimensional additive manufacturing device according to claim 2, wherein the result acquisition unit acquires at least one of an abnormality in the three-dimensional additive manufacturing device and an abnormality in the layered structure as the determination result.

4. The three-dimensional additive manufacturing device according to claim 3, wherein as the abnormality type of the three-dimensional additive manufacturing device, the result acquisition unit acquires at least one of an abnormality in protective glass provided to the light irradiation unit, a state in which a foreign matter adheres to at least one of the light irradiation unit and the powder supply unit, dew condensation on the light irradiation unit, and an alignment abnormality between the light irradiation unit and the powder supply unit.

5. The three-dimensional additive manufacturing device according to claim 3 or 4, wherein as the abnormality type of the layered structure, the result acquisition unit acquires at least one of an abnormality in a height of a bead of the layered structure, a crack in the layered structure, and a state in which sputtering occurs from the layered structure.

6. The three-dimensional additive manufacturing device according to any one of claims 1 to 5, wherein the information output unit stops the manufacturing of the layered structure based on the determination result.

7. The three-dimensional additive manufacturing device according to claim 6, wherein the information output unit stops the manufacturing of the layered structure when a number of times of acquiring a determination result that the manufacturing of the layered structure is abnormal is equal to or greater than a threshold.

8. The three-dimensional additive manufacturing device according to any one of claims 1 to 7, wherein the information output unit outputs a warning indicating that there is an abnormality in the manufacturing based on the determination result.

9. The three-dimensional additive manufacturing device according to any one of claims 1 to 8, wherein the information output unit controls at least one of a moving speed of the powder supply unit with respect to the layered structure and an output of the light beam, based on the determination result.

10. The three-dimensional additive manufacturing device according to any one of claims 1 to 9, wherein the learning model is a learning model obtained by machine-learning a correspondence relationship between an image of the manufacturing site when at least one of the abnormality types occurs, and the one of the abnormality types, the abnormality types including an abnormality in protective glass provided to the light irradiation unit, a state in which a foreign matter adheres to at least one of the light irradiation unit and the powder supply unit, dew condensation on the light irradiation unit, an alignment abnormality between the light irradiation unit and the powder supply unit, an abnormality in a height of a bead of the layered structure, a crack in the layered structure, and a state in which sputtering occurs from the layered structure.

11. A control method to be used in a three-dimensional additive manufacturing device including a powder supply unit that supplies powder and a light irradiation unit that irradiates the powder with a light beam to melt and harden the powder to manufacture a layered structure, the method comprising the steps of:
capturing an image of a manufacturing site including a molten pool formed of a molten powder;
acquiring a determination result as to whether manufacturing of the layered structure is abnormal by inputting the image to a learning model, the learning model being obtained by machine-learning a correspondence relationship between an image of the manufacturing site at a time of abnormality and an abnormality type of the image, and being used for determining whether the manufacturing of the layered structure is abnormal; and
outputting information based on the determination result.

12. A program for causing a computer to execute a control method to be used in a three-dimensional additive manufacturing device including a powder supply unit that supplies powder and a light irradiation unit that irradiates the powder with a light beam to melt and harden the powder to manufacture a layered structure; the control method comprising the steps of:
capturing an image of a manufacturing site including a molten pool formed of a molten powder;
acquiring a determination result as to whether manufacturing of the layered structure is abnormal by inputting the image to a learning model, the learning model being obtained by machine-learning a correspondence relationship between an image of the manufacturing site at a time of abnormality and an abnormality type of the image, and being used for determining whether the manufacturing of the layered structure is abnormal; and
outputting information based on the determination result.
